(19) Europäisches Patentamt
European Patent Office
Office européen des brevets

(11) Numéro de publication: 0 100 248
B1

(12) # FASCICULE DE BREVET EUROPÉEN

(45) Date de publication du fascicule du brevet: 23.07.86

(51) Int. Cl.⁴: C 10 L 1/22

(21) Numéro de dépôt: 83401090.2

(22) Date de dépôt: 31.05.83

(54) **Copolymères à fonctions azotées, utilisables notamment comme additifs d'abaissement du point de trouble des distillats moyens d'hydrocarbures, et compositions de distillats moyens d'hydrocarbures renfermant lesdits copolymères.**

(30) Priorité: **04.06.82 FR 8209908**

(43) Date de publication de la demande: **08.02.84 Bulletin 84/6**

(45) Mention de la délivrance du brevet: **23.07.86 Bulletin 86/30**

(84) Etats contractants désignés: **BE CH DE GB IT LI NL SE**

(56) Documents cité:
**FR-A-1 459 497**
**FR-A-1 514 629**
**FR-A-2 022 172**
**FR-A-2 065 425**
**GB-A-2 065 676**

(73) Titulaire: **INSTITUT FRANCAIS DU PETROLE, 4, Avenue de Bois- Préau, F-92502 Rueil- Malmaison (FR)**
Titulaire: **ELF FRANCE, 137, Rue de l'Université, F-75007 Paris (FR)**

(72) Inventeur: **Garapon, Jacques, 64, rue des Aqueducs, F-69005 Lyon (FR)**
Inventeur: **Sillion, Bernard, 13, rue des Erables, F-78150 Rocquencourt (FR)**
Inventeur: **Damin, Bernard, 162, Grande Rue, F-69600 Oullins (FR)**
Inventeur: **Leger, Robert, Rue Pierre Semard 5, Résidence Cazardes, F-69520 Grigny (FR)**

(74) Mandataire: **Colas des Francs, Jean, Institut Français du Pétrole 4, Avenue de Bois Préau, F-92502 Rueil- Malmaison (FR)**

EP 0 100 248 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

L'invention concerne de nouveaux additifs azotés utilisables comme agents d'abaissement du point de trouble des distillats moyens d'hydrocarbures (fuel-oils, gazoles), ainsi que les compositions de distillats moyens renfermant les dits additifs.

Les distillats de pétrole concernés par l'invention consistent en des distillats moyens (fuel-oils, gazoles) dont l'intervalle de distillation (norme ASTM D 86—67) se situe entre 150°C et 450°C. Las gazoles considérés plus particulièrement ont un intervalle de distillation allant d'une température initiale comprise entre 160°C et 190°C à une température finale comprise entre 350°C et 390°C.

Il existe sur le marché un grand nombre de produits préconisés pour amé liorer la température limite de filtrabilité et le point d'écoulement des coupes pétrolières riches en paraffines, tels que par exemple:

— les polymères à base d'oléfines à longue chaîne,
— les copolymères à base d'alpha-oléfines,
— les copolymères éthylène-acétate de vinyle,
— les N-acylaminoéthylesters de polymères contenant des acides, ou encore:
— des composés halocarbonés.

Ces produits agissent sur les phénomènes cinétiques de cristallisation et modifient la taille des cristaux, permettant l'emploi de la suspension à une température plus basse sans colmatage des canalisations et des filtres. Les produits mentionnés ci-dessus ne modifient pas la température à laquelle apparaissent les premiers cristaux de paraffine. En effet, il a été considéré jusqu'à présent que cette température était une donnée dépendant du poids moléculaire et de la formule des paraffines et de la nature du solvant.

L'abaissement du point de trouble des distillats moyens (notamment des gazoles) par un additif, présenterait un intérêt important pour les raffineurs, car il permettrait, sans modifier le schéma de distillation, de respecter les spécifications, qui évoluent actuellement dans le sans d'une plus grande sévérité.

On a maintenant découvert que certains composés chimiques, dont une définition est donnée plus loin, ont, lorsqu'ils sont ajoutés aux distillats moyens, la propriété de ne laisser apparaître les premiers cristaux de paraffines qu'à une température plus basse que celle à laquelle ces cristaux apparaîtraient en l'absence de tels additifs. Cette propriété est d'autant plus inattendue qu'elle se conserve après plusieurs cycles de réchauffage et de refroidissement et se manifeste par un mécanisme qui n'est pas encore expliqué.

Cette classe de composés chimiques présente également un effet sur d'autres propriétés des distillats moyens (notamment des gazoles), en modifiant le comportement du milieu qui contient les paraffines précipitées.

Ainsi, les composés préconisés dans l'invention ont une action importante sur la température limite de filtrabilité et la température d'écoulement.

Lorsque les cristaux de paraffines, dont la formation est provoquée par le refroidissement, sont apparus, leur tendance naturelle est de se rassembler par gravité dans la partie basse. Ce phénomène, généralement connu sous le terme de sédimentation, provoque le bouchage des canalisations et des filtres et est préjudiciable à la bonne utilisation des distillats moyens et notamment des gazoles. Les composés chimiques préconisés dans l'invention peuvent diminuer notablement la vitesse de sédimentation des paraffines formées par refroidissement des gazoles et autres distillats moyens.

Enfin, les produits préconisés pour leur propriétés mentionnées ci-dessus confèrent en outre aux gazoles et distillats moyens auxquels ils sont ajoutés, des propriétés anti-corrosion sur les surfaces métalliques.

Dans le brevet britannique 2 065 676 est décrite l'utilisation de certains copolymères comme additifs destinés à abaisser le point d'écoulement de diverses huiles hydrocarbonées, en particulier de distillats moyens de pétrole, tels que des gazoles et des fuel-oils. Les copolymères utilisés consistent notamment en des terpolymères formés:

— (A) de motifs dérivant d'esters acryliques;
— (B) de motifs dérivant de diisobutylène et,
— (C) des motifs dérivant d'un composé α,β dicarboxylique insaturé.

Ces derniers peuvent consister en des anhydrides, des acides dicarboxyliques, des diesters ou des imides N-substitués par des radicaux hydrocarbonés pouvant comporter en outre, au moins une fonction amine et/ou au moins une fonction hydroxyle. Les motifs imides N-substitués illustrés dans ce brevet dérivent plus particulièrement de la condensation de la N,N-diméhyl propane diamine-1,3 sur des groupements anhydrides, diacides ou diesters vicinaux présents dans le terpolymère.

D'une manière générale, les additifs de l'invention peuvent être définis comme des produits polymériques de masse moléculaire moyenne en nombre d'environ 1000 à 10000, résultant de la

condensation d'un ou plusieurs composés à fonction amine primaire défini plus loin sur un copolymère comprenant:

— (A) des motifs provenant d'au moins une oléfine- α linéaire,
— (B) des motifs dérivant d'au moins un composé α,β-dicarboxylique insaturé, sous forme de diacide, diester d'alkyle léger ou d'anhydride; et
— (C) des motifs provenant d'au moins un ester d'alkyle d'acide monocarboxylique insaturé.

Plus particulièrement, les copolymères considérés comprennent une proportion de 15 à 40% en moles de motifs dérivant d'oléfines-α, de 20 à 70% en moles de motifs dérivant de composé α,β dicarboxylique insaturé et de 15 à 40% en moles de motifs dérivant d'ester alkylique d'acide monocarboxylique insaturé.

Les oléfines-α linéaires entrant dans la composition des polymères renferment de préférence au moins 16 atomes de carbone. On utilise avantageusement des mélanges d'oléfines-α linéaires de 20 à 24 atomes de carbone, de 24 à 28 atomes de carbone ou encore des coupes renfermant environ 20% en poids d'oléfines-α d'au plus 28 atomes de carbone et environ 80% en poids d'oléfines-α de 30 atomes de carbone ou plus. Le plus souvent, l'oléfine-α linéaire renferme de 16 à 30 atomes de carbone.

Les composés α,β-dicarboxyliques insaturés entrant dans la composition du copolymère sont plus particulièrement des acides dicarboxyliques tels que l'acide maléïque, ou des acides alkylmaléïques, par exemple l'acide méthylmaléïque (ou citraconique). Ces composés peuvent aussi consister en des diesters d'alkyle de ces acides dicarboxyliques en particulier les diesters méthyliques, éthyliques en propyliques, ou encore en les anhydrides correspondants à ces acides dicarboxyliques. Dans le cadre de l'invention, les anhydrides seront préférés, et, plus particulièrement, l'anhydride maléïque.

Les esters d'alkyle d'acides monocarboxyliques insaturés sont plus particulièrement les acrylates et les méthacrylates d'alkyle de 4 à 30 atomes de carbone, par exemple les acrylates de butyle, d'éthylhexyle, de décyle, de dodécyle, d'hexadécyle, d'octadécyle et d'éicosyle. On peut encore citer les acrylates et les méthacrylates de coupes industrielles d'alcools renfermant en moyenne 12 atomes de carbone (acrylate et méthacrylate de lauryle) ou 18 atomes de carbone (acrylate et méthacrylate de stéaryle), ainsi que les coupes d'alcools plus lourds, riches en alcools ayant 20 ou 22 atomes de carbone.

Le composé à fonction amine primaire que l'on condense avec les copolymères décrits ci-dessus pour former les additifs de l'invention peut répondre à l'une des deux formules générales suivantes (I) et (II):

$$R-Z-[-(CH_2)_n-NH-]_m-H \quad (I)$$

$$HO-CH_2-R''-NH_2 \quad (II)$$

Dans la formule (I), R représente un radical aliphatique saturé monovalent, comprenant de 1 à 30 atomes de carbone. Z peut, suivant les cas, être un atome d'oxygène ou représenter un groupement divalent —NH— ou —NR'—, R' étant un radical aliphatique monovalent, de préférence linéaire, comprenant de 1 à 30 atomes de carbone et préférentiellement de 12 à 24 atomes de carbone, n est un nombre entier de 2 à 4, et m peut avoir la valeur zéro, lorsque z est NH, ou être un nombre entier de 1 à 4, dans tous les cas.

Les composés de formule (I) ci-dessus peuvent consister en des amines primaires de formule $R-NH_2$ (dans ce cas, dans la formule (I), Z représente le groupement —NH—, et la valeur de m est zéro). De préférence, le radical R est linéaire et renferme de 12 à 24 atomes de carbone. Comme exemples spécifiques de ces amines, on peut citer:

la dodécylamine, la tétradécylamine, l'hexadécylamine, l'octadécylamine, l'éicosylamine et la docosylamine.

Les composés de formule (I) peuvent encore consister en des polyamines dérivées d'amines aliphatiques saturées répondant à la formule:

$$R-NH-[-(CH_2)_n-NH-]_m-H$$

qui correspond à la formule générale (I) dans laquelle Z représente le groupement —NH—; m peut avoir une valeur de 1 à 4 et n une valeur de 2 à 4, de préférence 3.

De préférence, le radical R est linéaire et renferme de 12 à 24 atomes de carbone. Comme composés spécifiques, on peut citer: le N-dodécyl diamino-1,3 propane, le N-tétradécyl diamino-1,3 propane, le N-hexadécyl diamino-1,3 propane, le N-octadécyl diamino-1,3 propane, le N-éicosyl diamino-1,3 propane, le N-docosyl diamino-1,3 propane, la N-hexadécyldipropylène triamine, la N-octadécyl dipropylène triamine, la N-éicosyldipropylène triamine et la N-docosyldipropylène triamine.

Les composés de formule (I) peuvent également consister en des polyamines répondant à la formule:

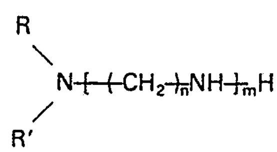

correspondant à la formule générale (I) où Z représente —NR'— et où R et R', identiques ou différents, sont chacun un radical alkyle ayant de 1 à 24 et de préférence de 8 à 22 atomes de carbone, R et R' renfermant à eux deux de préférence de 16 à 32 atomes de carbone; n a une valeur de 2 à 4 et m une valeur de 1 à 4.

Comme composés spécifiques, on peut citer le N,N-diéthyl-diamino-1,2 éthane, le N,N-diisopropyl-diamino-1,2 éthane, le N,N-dibutyl-diamino-1,2 éthane, le N,N-diéthyl-diamino-1,4 butane, le N,N-diméthyl-diamino-1,3 propane, le N,N-diéthyl-diamino-1,3 propane, le N,N-dioctyl-diamino-1,3 propane, le N,N-didécyldiamino-1,3 propane, le N,N didodécyl-diamino-1,3 propane, le N,N-ditétradécyl-diamino-1,3 propane, le N,N-dihexadécyldiamino-1,3 propane, le N,N-dioctadécyldiamino-1,3 propane, la N,N-didodécyldipropylènetriamine, la N,N-ditétradécyldipropylène triamine, la N,N-dihexadécyl-dipropylène triamine et la N,N-dioctadécyldipropylènetriamine.

Enfin les composés de formule (I) considérés dans l'invention peuvent consister en des éther-amines répondant plus particulièrement à la formule:

$$R-O-[-(CH_2)_n-NH-]_m-H$$

qui correspond à la formule générale (I) dans laquelle Z est un atome d'oxygène; de préférence, le radical R renferme de 12 à 24 atomes de carbone, m est un nombre entier de 1 à 4 et n est un nombre entier de 2 à 4, préférentiellement 2 ou 3.

Parmi les éther-amines, on peut citer comme composés spécifiques: la méthoxy-2 éthylamine, la méthoxy-3 propylamine, la méthoxy-4 butylamine, l'éthoxy-3 propylamine, l'octyloxy-3 propylamine, la décyloxy-3 propylamine, l'hexadécyloxy-3 propylamine, l'éicosyloxy-3 propylamine, la docosyloxy-3 propylamine, le N-(octyloxy-3 propyl) diamino-1,3 propane, le N-(décyloxy-3 propyl) diamino-1,3 propane, la (triméthyl-2,4,6 décyl) oxy-3 propylamine et le N-[(triméthyl-2,4,6 décyl)oxy-3 propyl] diamino-1,3 propane.

Le composé à fonction amine primaire mis en jeu dans la préparation des additifs de l'invention peut aussi consister en un aminoalcool de formule (II):

$$HO-CH_2-R''-NH_2 \qquad (II)$$

où R'' représente un radical aliphatique saturé divalent, linéaire ou ramifié, de préférence linéaire, renfermant de 1 à 18 atomes de carbone.

Comme exemples spécifiques, on peut citer:

la monoéthanolamine, l'amino-1 propanol-3, l'amino-1 butanol-4, l'amino-1 pentanol-5, l'amino-1 hexanol-6, l'amino-1 heptanol-7, l'amino-1 octanol-8, l'amino-1 décanol-10, l'amino-1 undécanol-11, l'amino-1 tridécanol-13, l'amino-1 tétradécanol-14, l'amino-1 hexadécanol-16, l'amino-2 méthyl-2 propanol-1, l'amino-2 butanol-1 et l'amino-2 pentanol-1.

Il doit être entendu que, sans sortir du cadre de l'invention, il est possible de mattre en jeu un ou plusieurs composés répondant à la formule (I) et/ou un ou plusieurs composés répondant à la formule (II).

La préparation des additifs de l'invention est en général effectuée en deux étapes: on prépare tout d'abord les terpolymères, puis on effectue sur ceux-ci la condensation du composé de formule (I) et/ou (II).

Les terpolymères peuvent être préparés, dans la première étape, selon les méthodes classiques de polymérisation par voie radicalaire, par exemple en présence d'un amorceur de type azobisisobutyronitrile ou peroxyde, en solution dans un solvant hydrocarboné, tel que par exemple le cyclohexane, l'isooctane, le dodécane, le benzène, le toluène, le xylène, on le diisopropylbenzène ou encore le tétrahydrofuranne ou le dioxanne.

On utilisera avantageusement des coupes hydrocarbonées à point d'ébullition relativement élevé, telles qu'un kérosène ou un gazole.

La quantité de solvant utilisée sera en général telle que la concentration pondérale en matière sèche se situe entre 25 et 70% et de préférence au voisinage de 60%.

La réaction de copolymérisation, en présence de l'amorceur radicalaire est effectuée à une température de 70 à 200°C et de préférence de 80 à 130°C. Selon les conditions opératoires, la durée de la réaction peut aller de 2 à 14 heures. On obtient une solution de copolymères sous la forme d'un liquide visqueux de couleur jaune clair.

On effectue ensuite, dans une deuxième étape, la condensation du composé de formule (I) ou (II) sur le copolymère formé dans la première étape, selon toute méthode usuelle.

A la solution de copolymère obtenue comme décrit précédemment, on ajoute en général le composé de formule (I) ou (II) en une proportion molaire correspondant sensiblement à la proportion de diacide, de diester, ou d'anhydride insaturé mis en jeu dans la préparation du copolymère. Cette proportion peut être par exemple de 0,9 à 1,1 mole de composé (I) ou (II) par mole de composé dicarboxylique.

On peut aussi prévoir un défaut plus important de composé de formule (I). On peut alors utiliser une proportion aussi faible que, par exemple, 0.5 mole par mole de composé dicarboxylique mis en jeu dans le copolymère.

La réaction est réalisée par chauffage du mélange à une température comprise entre 75 et 130°C, de préférence entre 80 et 100°C, la durée de la réaction étant comprise entre environ 1 et 6 heures, une durée de l'ordre de 2 heures étant généralement suffisante. La réaction des produits de formule (I) ou (II) sur les

motifs (B) du copolymère donne naissance à des groupements imides (succinimides), cette réaction étant accompagnée de la formation d'eau ou d'alcool selon la nature des motifs dicarboxyliques (B) (diacide, anhydride ou diester). On peut, si on le désire, évacuer les produits volatils formés hors du mélange réactionnel, soit par entraînement avec un gaz inerte comme par exemple l'azote, soit par distillation azéotropique avec le solvant choisi.

Un autre mode particulier de synthèse des additifs considérés dans l'invention peut consister, dans certains cas, à réaliser la copolymérisation radicalaire d'un ou plusieurs esters d'alkyle d'acides monocarboxyliques insaturés avec un mélange d'oléfines-α et de maléïmides N-substitués, ces derniers étant obtenus par réaction préalable des composés de formule (I) ou (II) sur l'anhydride maléïque ou un de ses dérivés précités.

Les additifs sont obtenus en solution dans le solvant choisi et peuvent être utilisés sous cette forme directement dans les distillats moyens de pétrole (notamment dans les gazoles) dont on souhaite améliorer le point de trouble.

Bien que le mécanisme d'action de ces additifs sur la température d'apparition des cristaux de paraffines dans les distillats moyens n'ait pas encore été clairement élucidé, on observe une nette amélioration du point de trouble des distillats moyens traités par ces additifs, lorsqu'ils sont ajoutés à des concentrations allant par exemple de 0,001 à 1% en poids et de préférence de 0,01 à 0,2%. L'abaissement du point de trouble peut atteindre par exemple 5°C, ou plus.

Il est remarquable de constater que les additifs considérés dans l'invention, qui sont efficaces sur l'amélioration du point de trouble des distillats moyens, ont d'autre part la propriété d'inhiber la sédimentation des n-paraffines dans les distillats moyens au repos, d'améliorer la température limite de filtrabilité et la température d'écoulement, et d'inhiber la corrosion des surfaces métalliques en contact avec ces distillats.

Les exemples suivants illustrent l'invention, sans la limiter.

Exemple 1

a) On introduit dans un réacteur muni d'un système d'agitation, d'un réfrigérant et d'une arrivée de gaz inerte, 73,5 g (0,75 mole) d'anhydride maleïque, puis 182 g (0,5 mole) d'une coupe d'oléfines-α composée d'environ 1% d'oléfiné en $C_{22}$, de 30% d'oléfine en $C_{24}$, de 39% d'oléfine en $C_{26}$, de 20% d'oléfine en $C_{28}$ et 10% d'oléfine en $C_{30}$ et l'on ajoute 200 ml d'un solvant constitué par une coupé pétrolière distillant entre 120 et 250°C. On porte à 80°C, une heure, en agitant. On introduit ensuite lentement et simultanément 92 g (0,5 mole) d'acrylate d'éthyl-2 hexyle et 2,5 g de peroxyde de benzoyle. On maintient le chauffage de l'ensemble 12 heures à 80°C et l'on obtient le terpolymère en solution sous forme d'un liquide jaune claire visqueux.

b) Dans le même réacteur, on ajoute à cette solution 210 g (correspondant à 0,75 équivalent molaire d'amine primaire) d'une coupe d'amines grasses primaires dont les chaines alkyles comportent en moyenne 1% de $C_{14}$, 28% de $C_{16}$ et 71% de $C_{18}$; on ajoute alors 150 ml du solvant décrit en a) pour obtenir une teneur en matière sèche de l'ordre de 60%. Après 2 heures de chauffage à 90°C, on obtient une solution jaune claire, visqueuse, dont le spectre infra-rouge montre la présence de bandes imides. Cette solution, ajustée par le même solvant à une teneur de 50% en matière sèche, constitue la "solution mère" de l'additif I.

Exemples 2 à 7

On prépare un terpolymère suivant l'exemple 1.a) et l'on procède sur diverses parts de ce terpolymère à la condensation de composés présentant des fonctions amines primaires, en suivant la mode opératoire décrit en 1.b) et en respectant les proportions molaires de l'exemple 1.

Exemple 2

Sur le terpolymère préparé suivant 1.a), on condense une coupe d'amines grasses primaires dont les chaines alkyles comprennent environ: 1% de $C_{14}$, 5% de $C_{16}$, 42% de $C_{18}$, 12% de $C_{20}$ et 40% de $C_{22}$. On obtient ainsi une solution de l'additif II.

Exemple 3

La coupe de N-alkyl diamino-1,3 propane utilisée dans cet exemple pour la condensation sur le terpolymère préparé suivant 1.a) est composée d'amines dont les chaines alkyles sont constituées en moyenne de 1% de $C_{14}$, 28% de $C_{16}$ et 71% de $C_{18}$. Le résultat de cette opération fournit l'additif III.

Exemple 4

On utilise comme agent de condensation sur le terpolymère 1.a) une coupe de N-alkyl-diamino-1,3 propane dont les chaines alkyles sont constituées d'environ 1% de $C_{14}$, 5% de $C_{16}$, 42% de $C_{18}$, 12% de $C_{20}$ et 40% de $C_{22}$. Cette opération fournit l'additif IV.

Exemple 5

On condense sur le terpolymère obtenu suivant 1.a), l'amino-1 hexanol- Le résultat de cette condensation constitue l'additif V.

Exemple 6

La coupe d'amines grasses utilisée dans l'exemple 1.b) est remplacée par une quantité équimoléculaire de N-[(triméthyl-2,4,6 décyl) oxy-3 propyl] diamino-1,3 propane. Le produit obtenu constitue l'additif VI.

Exemple 7

La coupe d'amines grasses utilisée dans l'exemple 1.b) est remplacée par une quantité équimoléculaire de N,N-didodécyldiamino-1,3 propane. Le produit de condensation que l'on obtient constitue l'additif VII.

Exemples 8 et 9

On prépare suivant les conditions expérimentales décrites en 1.a), deux terpolymères qui diffèrent de celui préparé en 1.a) par la nature de la coupe d'oléfines-α utilisée. On condense sur ces deux nouveaux copolymères la même coupe d'amines grasses que celle utilisée dans l'exemple 1.b) en suivant le même mode opératoire qu'en 1.b).

Exemple 8

La coupe d'oléfines-α utilisée pour préparer le nouveau terpolymère est composée d'environ 1% d'oléfine en $C_{18}$, 49% d'oléfine en $C_{20}$, 42% d'oléfine en $C_{22}$ et 8% d'oléfine en $C_{24}$. Après condensation de la coupe d'amines décrite en 1.b), on obtient l'additif VIII.

Exemple 9

On utilise pour préparer le terpolymère une coupe d'oléfines contenant environ 22% d'oléfines à nombre d'atomes de carbone égal ou inférieur à 28, et 78% d'oléfines à nombre d'atomes égal ou supérieur à 30. La condensation sur ce copolymère de la coupe d'amines décrite en 1.b) fournit l'additif IX.

Exemples 10 à 13

En utilisant les conditions expérimentales décrites en 1.a), on prépare des terpolymères différents de celui préparé en 1.a) par la nature, et le cas échéant, par la proportion molaire du monomère acrylique utilisé. On condense sur ces nouveaux copolymères la même coupe d'amines que celle utilisée en 1.b), en suivant le même mode opératoire et en gardant les mêmes rapports molaires.

Exemple 10

Pour préparer le terpolymère, on utilise un poids équivalent à 0,25 mole d'une coupe d'acrylates d'alcools à longue chaine, formée d'environ 7% d'alcool en $C_{18}$, 58% en $C_{20}$, 30% en $C_{22}$ et 3% en $C_{24}$. Après condensation suivant 1.b), on obtient l'additif X.

Exemple 11

On utilise 0,5 mole d'acrylate de butyle pour préparer le terpolymère; dans cet exemple, on maintient, au cours de la réaction de polymérisation, une légère surpression de gaz inerte afin d'éviter l'évaporation de l'acrylate de butyle. La condensation d'amines suivant 1.b) fournit l'additif XI.

Exemple 12

Pour préparer le terpolymère, on utilise, toutes choses égales par ailleurs, l'équivalent de 0,5 mole d'une coupe de méthacrylates d'alcools divers qui contient en moyenne 2% d'alcool en $C_{14}$, 51% en $C_{16}$, 30% en $C_{18}$, 14% en $C_{20}$ et 3% en $C_{22}$. La condensation d'amines suivant 1.b) fournit l'additif XII.

Exemple 13

On met en jeu l'équivalent d'une demi-mole d'une coupe de méthacrylates d'alcools de composition approximative: 13% en $C_8$, 15% en $C_{10}$, 28% en $C_{12}$, 20% en $C_{14}$, 14% en $C_{16}$ et 7% en $C_{18}$.

En condensant sur ce nouveau terpolymère la coupe d'amines utilisée en 1.b), et en opérant comme décrit en 1.b) on obtient l'additif XIII.

Les additifs décrits ci-dessus sont obtenus en solution dans une coupe pétrolière distillant entre 120 et 250°C. Leur concentration dans cette solution est généralement ajustée à 50% de matière sèche; les solutions obtenues constituent des "solutions-mères" de ces additifs, dont on teste l'activité en les incorporant à raison de 0,1% en poids d'additif par rapport au gazole, à deux coupes de gazoles d'origine ARAMCO, désignées par la suite: $G_1$ et $G_2$. Les caractéristiques de ces coupes sont indiquées dans le tableau I ci-après:

TABLEAU I

| | Distillation ASTM | | % distillé à 350°C | Masse volumique à 15°C en (kg/l) |
|---|---|---|---|---|
| | Pi°C | Pf°C | | |
| $G_1$ | 181 | 382 | 89 | 0.846 |
| $C_2$ | 186 | 385 | 87 | 0.847 |

Pour chacune des compositions ainsi formées, deux déterminations ont été effectuées:

— le point de trouble suivant la méthode AFNOR T 60—105, et
— le point d'écoulement par la méthode AFNOR T 60—105.

Les résultats de ces déterminations sont rassemblés dans le tableau ci-après:

TABLEAU II

| Additifs | Point de trouble (°C) | | Point d'écoulement (°C) | |
|---|---|---|---|---|
| | $G_1$ | $G_2$ | $G_1$ | $G_2$ |
| sans | +2 | +6 | −6 | −3 |
| 0,1% I | −1 | +1 | −12 | −12 |
| 0,1% II | 0 | +2 | −9 | −9 |
| 0,1% III | −1 | +2 | −12 | −12 |
| 0,1% IV | 0 | +2 | −12 | −12 |
| 0,1% V | 0 | +3 | −9 | −9 |
| 0,1% VI | −1 | +2 | −12 | −12 |
| 0,1% VII | −2 | +1 | −12 | −9 |
| 0,1% VIII | −1 | +2 | −12 | −12 |
| 0,1% IX | −1 | +2 | −12 | −12 |
| 0,1% X | 0 | +2 | −12 | −9 |
| 0,1% XI | −1 | +1 | −12 | −12 |
| 0,1% XII | −1 | +1 | −12 | −12 |
| 0,1% XIII | −2 | +1 | −9 | −9 |

Exemple 14

a) En suivant le mode opératoire décrit dans l'exemple 1a), on prépare un terpolymère à partir de

. 49 g (0,5 mole) d'anhydride maléïque;
. 148 g (environ 0,5 mole) d'une coupe oléfines-α constituée de 1% d'oléfine-α en $C_{18}$, 49% d'oléfine-α en $C_{20}$, 42% d'oléfine-α en $C_{22}$ et 8% d'oléfine-α en $C_{24}$; et
. 169 g (0,5 mole) de méthacrylate de stéaryle.

b) Sur le terpolymère obtenu, en condense, suivant le mode opératoire décrit dans l'exemple 1b), 140 g (0,5 équivalent molaire d'amine primaire) d'une coupe d'amines grasses primaires dont les chaînes alkyles comportent en moyenne 1% de $C_{14}$, 28% de $C_{16}$ et 71% de $C_{18}$.

La solution obtenue est ajustée à 50% en poids de matière sèche au moyen d'un solvant consistant en une coupe pétrolière distillant entre 120 et 250°C. On forme ainsi une "solution mère" d'additif XIV.

Exemples 15 à 18

On prépare un terpolymère suivant le mode opératoire de l'exemple 14a) et l'on procède sur diverses parts de ce terpolymère à la condensation de composés présentant des fonctions amines primaires, en suivant le mode opératoire décrit en 1.b) et en respectant les proportions molaires de l'exemple 14b).

Exemple 15

On utilise une coupe de N-alkyl diamino-1,3 propane composée d'amines dont les chaînes alkyles sont constituées, en moyenne, de 1% de $C_{14}$, 28% de $C_{16}$ et 71% de $C_{18}$. Le résultat de cette opération conduit à l'additif XV.

Exemple 16

On condense sur le terpolymère l'amino-1 undécanol-11. On obtient l'additif XVI.

Exemple 17

On condense sur le terpolymère la docosyloxy-3 propylamine, ce qui conduit à l'additif XVII.

Exemple 18

Le composé à fonction amine primaire mis en jeu est le N,N-dioctyldiamino-1,3 propane. Le produit de la réaction fournit l'additif XVIII.

On teste l'activité des additifs obtenus dans les exemples 14 à 18 en les incorporant à trois coupes de gazoles, désignées dans la suite par $G_3$, $G_4$ et $G_5$, dont les caractéristiques sont données au Tableau III.

TABLEAU III

| | Distillation ASTM | | % distillé à 350°C | Masse volumique à 15°C (en kg/l) |
|---|---|---|---|---|
| | Pi°C | Pf°C | | |
| $G_3$ | 184 | 374 | 90 | 0,847 |
| $G_4$ | 205 | 375 | 87 | 0,848 |
| $G_5$ | 164 | 375 | 91 | 0,842 |

Les additifs sont incorporés à la concentration de 0,2% en poids (et dans certains cas de 0,1% en poids) par rapport au gazole. On détermine sur les compositions ainsi formées les valeurs du point de trouble, de la température limite de filtrabilité et du point d'écoulement, respectivement suivant les méthodes AFNOR T 60—105, M 07—042 et T 60—105.

Les résultats de ces déterminations sont rasemblées dans le tableau IV ci-après:

TABLEAU IV

| Additifs | Point de trouble (°C) | | | T.L.F. (°C) | | | Point d'écoulement (°C) | | |
|---|---|---|---|---|---|---|---|---|---|
| | $G_3$ | $G_4$ | $G_5$ | $G_3$ | $G_4$ | $G_5$ | $G_3$ | $G_4$ | $G_5$ |
| sans | +3 | +3 | +4 | 0 | −1 | +2 | −6 | −6 | −6 |
| 0,1% XIV | – | −2 | −2 | – | −6 | −7 | – | −12 | −21 |
| 0,2% XIV | −3 | −3 | −3 | −9 | −9 | −10 | −21 | −15 | −21 |
| 0,2% XV | −2 | −3 | −3 | −8 | −8 | −9 | −18 | −15 | −21 |
| 0,2% XVI | −1 | −2 | −2 | −6 | −6 | −7 | −15 | −15 | −18 |
| 0,2% XVII | −1 | −1 | −1 | −5 | −5 | −6 | −15 | −15 | −18 |
| 0,2% XVIII | −1 | −1 | 0 | −4 | −5 | −6 | −12 | −12 | −15 |

Exemple 19

Dans cet exemple, on teste l'effet anti-corrosion de l'additif de l'exemple 1.

Le produit I a été utilisé dans les deux gazoles $G_1$ et $G_2$ déjà décrits précédemment, à la concentration de 0,01% en poids.

Le test de corrosion consiste à étudier la corrosion par l'eau de mer synthétique, d'éprouvettes cylindriques en acier ou en fer poli, selon la norme ASTM D 665 modifiée de la façon suivante: la température est de 32,2°C et la durée de 20 heures.

Les deux gazoles $G_1$ et $G_2$ non additivés donnent des éprouvettes rouillées à 100% de leur surface et les deux gazoles contenant 0,01% en poids d'additif donnent des éprouvettes intactes à 0% de rouille.

**Revendications**

1. Produit utilisable notamment comme additif pour abaisser le point de trouble de distillats moyens, caractérisé en ce qu'il présente une masse moléculaire moyenne en nombre de 1000 à 10 000 et résulte de la réaction sur un copolymère renferment de 15 à 40% en moles de motifs (A) provenant d'au moins une oléfine-α linéaire:

de 20 à 70% en moles de motifs (B) provenant d'au moins un composé α,β dicarboxylique insaturé sous forme de diacide, de diester d'alkyle léger ou d'anhydride; et

de 15 à 40% en moles de motifs (C) provenant d'au moins un ester d'alkyle d'acide monocarboxylique insaturé

d'au moins un composé à fonction amine primaire répondant à une des formules générales:

$$R{-}Z{-}[(CH_2)_nNH]_mH \qquad (I)$$

et

$$HO{-}CH_2{-}R''{-}NH_2 \qquad (II)$$

où R représente un radical aliphatique saturé monovalent de 1 à 30 atomes de carbone, Z est choisi parmi les groupements —NH—, —NR'—, dans lesquels R' représente un radical aliphatique saturé monovalent de 1 à 30 atomes de carbone, et l'atome d'oxygène —O—, n est un nombre entier de 2 à 4, m est zéro lorsque Z est NH ou un nombre entier de 1 à 4 dans tous les cas; et R'' représente un radical aliphatique saturé divalent de 1 à 18 atomes de carbone.

2. Produit selon la revendication 1, caractérisé en ce que l'oléfine linéaire dont proviennent les motifs (A) renforme au moins 16 atomes de carbone.

3. Produit selon la revendication 1 ou 2, caractérisé en ce que l'oléfine-α linéaire dont proviennent les motifs (A) renferme de 16 à 30 atomes de carbone.

4. Produit selon l'une des revendications 1 à 3, caractérisé en ce que le composé α,β-dicarboxylique insaturé dont proviennent les motifs (B) consiste en au moins un acide maléique ou alkylmaléique, un diester méthylique, éthylique ou propylique d'un tel acide, ou un anhydride maléique ou alkylmaléique.

5. Produit selon l'une des revendications 1 à 4, caractérisé en ce que l'ester d'alkyle d'acide mono carboxylique insaturé dont proviennent les motifs (C) consiste en au moins un acrylate ou méthacrylate d'alkyle de 4 à 30 atomes de carbone.

6. Produit selon l'une des revendications 1 à 5, caractérisé en ce que le composé à fonction amine (I) consiste en au moins une amine primaire linéaire de 12 à 24 atomes de carbone.

7. Produit selon l'une des revendications 1 à 5, caractérisé en ce que le composé à fonction amine (I) consiste en au moins une polyamine de formule:

$$R{-}NH{-}[(CH_2)_nNH]_mH$$

où R représente un radical alkyle linéaire de 12 à 24 atomes de carbone, n est un nombre entier de 2 à 4 et m nombre entier de 1 à 4.

8. Produit selon l'une des revendication 1 à 5, caractérisé en ce que le composé à fonction amine (I) consiste en au moins une polyamine de formule:

$$R{-}NR'{-}[(CH_2)_nNH]_mH$$

où R et R' représentent chacun un radical alkyle linéaire de 8 à 24 atomes de carbone, R et R' renfermant ensemble de 16 à 32 atomes de carbone, n est un nombre entier de 2 à 4 et m un nombre entier de 1 à 4.

9. Produit selon l'une des revendications 1 à 5 caractérisé en ce que le composé à fonction amine (I) consiste en au moins une éther-amine de formule:

$$R{-}O{-}[(CH_2)_nNH]_mH$$

où R représente un radical alkyle de 12 à 24 atomes de carbone, n est un nombre entier de 2 à 4 et m un nombre entier de 1 à 4.

10. Produit selon l'une des revendications 1 à 5, caractérisé en ce que le composé à fonction amine (II) consiste en au moins un amino-alcool de formule:

$$HO-CH_2-R''-NH_2$$

où R'' représente un radical alkylène, linéaire ou ramifié, de 1 à 18 atomes de carbone.

11. Produit selon l'une des revendications 1 à 10, caractérisé en ce qu'il est obtenu par la copolymèrisation radicalaire de proportions appropriées d'au moins une oléfine-α linéaire, d'au moins un composé α,β-dicarboxylique insaturé, diacide, diester d'alkyle léger ou anhydride, et d'au moins un ester d'alkyle d'acide monocarboxylique insaturé, suivi de la condensation, sur le copolymère formé, d'au moins un composé à fonction amine primaire de formule (I) ou (II), en une proportion d'au moins environ 0,5 mole par mole de composé α,β-dicarboxylique insaturé mis en jeu.

12. Produit selon la revendication 11, caractérisé en ce que la proportion dudit composé à fonction amine primaire de formule (I) ou (II) est de 0,9 à 1,1 mole par mole de composé α,β dicarboxylique insaturé mis en jeu.

13. Produit selon l'une des revendications 1 à 10, caractérisé en ce qu'il est obtenu par la copolymérisation radicalaire de proportions appropriées d'au moins une oléfine-α linéaire, d'au moins un composé α,β-dicarboxylique insaturé et d'au moins un ester d'alkyle d'acide monocarboxylique insaturé, ledit composé α,β dicarboxylique insaturé consistant en au moins un imide N-substitué obtenu par réaction préalable d'un composé α,β-dicarboxylique insaturé avec au moins un composé à fonction amine primaire de formule (I) ou (II).

14. Composition de distillat moyen, caractérisée en ce qu'elle comprend une proportion majeure de distillat moyen ayant un intervalle de distillation entre 150 et 450°C, et une proportion mineure, suffisante pour en abaisser le point de trouble d'au moins un produit selon l'une des revendications 1 à 13.

15. Composition de distillat moyen selon la revendication 14, caractérisée en ce que ledit distillat moyen consiste en une coupe de gazole ayant un intervalle de distillation allant d'une température initiale de 160 à 190°C à une température finale de 350 à 390°C.

16. Composition de distillat moyen selon l'une des revendications 14 et 15, caractérisée en ce que la proportion dudit produit est de 0,001 à 1% en poids.

17. Composition de distillat moyen selon la revendication 16, caractérisée en ce que la proportion dudit produit est de 0,01 à 0,2% en poids.

**Patentansprüche**

1. Produkt, das insbesondere als Zusatz zur Erniedrigung des Trübungspunktes von Mitteldestillaten brauchbar ist, dadurch gekennzeichnet, daß es eine Zahlendurchschnittsmolekularmasse von 1000 bis 10000 aufweist und aus der Reaktion eines Copolymeren hervorgeht, das 15 bis 40 Mol% en Einheiten A enthält, die von zumindest einem linearen α-Olefin stammen:

20 bis 70 Mol% an Einheiten B, die von zumindest einer α,β ungesättigten Dicarbonsäureverbindung in Form der Disäure, des Niedrigalkyldiesters oder des Anhydrids stammen und

15 bis 40 Mol% an Einheiten C, die von zumindest einem Alkylester einer ungesättigten Monocarbonsäure stammen, mit

zumindest einer Verbindung mit primärer Aminfunktion, die einer der folgenden allgemeinen Formeln entspricht

$$R-Z-[-(CH_2)_n-NH-]_m-H \qquad (I)$$

und

$$HO-CH_2-R''-NH_2 \qquad (II)$$

worin R einen einwertigen, gesättigten aliphatischen Rest mit 1 bis 30 Kohlenstoffatomen, Z eine der Gruppen —NH—, —NR'—, worin R' einen einwertigen gesättigten aliphatischen Rest mit 1 bis 30 Kohlenstoffatomen bedeutet, oder das Sauerstoffatom —O—, n eine ganze Zahl von 2 bis 4, m Null, wenn Z NH ist, oder eine ganze Zahl von 1 bis 4 in allen Fällen, und R'' einen gesättigten zweiwertigen aliphatischen Rest mit 1 bis 18 Kohlenstoffatomen bedeuten.

2. Produkt nach Anspruch 1, dadurch gekennzeichnet, daß das lineare Olefin, von welchem die Einheiten (A) stammen, zumindest 16 Kohlenstoffatome aufweist.

3. Produkt nach Anspruch 1 oder 2, dadurch gekennzeichnet, daß das lineare α-Olefin, von welchem die Einheiten (A) stammen, 16 bis 30 Kohlenstoffatome aufweist.

4. Produkt nach einem der Ansprüche 1 bis 3, dadurch gekennzeichnet, daß die α,β ungesättigte Dicarbonsäureverbindung, von welcher die Einheiten (B) stammen, aus zumindest einer Maleinsäure oder Alkylmaleinsäure, einem Dimethyl-, Diäthyl- oder Dipropylester einer solchen Säure oder aus Maleinsäureanhydrid oder Alkylmaleinsäureanhydrid besteht.

5. Produkt nach einem der Ansprüche 1 bis 4, dadurch gekennzeichnet, daß der Alkylester der

ungesättigten Monocarbonsäure, von welcher die Einheiten (C) stammen, aus zumindest einem Alkylacrylat oder Alkylmethacrylat mit 4 bis 30 Kohlenstoffatomen im Alkylteil besteht.

6. Produkt nach einem der Ansprüche 1 bis 5, dadurch gekennzeichnet, daß die Verbindung mit Aminfunktion (I) aus zumindest einem linearen primären Amin mit 12 bis 24 Kohlenstoffatomen besteht.

7. Produkt nach einem der Ansprüche 1 bis 5, dadurch gekennzeichnet, daß die Verbindung mit Aminfunktion (I) aus zumindest einem Polyamin der Formel

$$R—NH-[-(CH_2)_n-NH-]_m-H$$

besteht, worin R einen linearen Alkylrest mit 12 bis 24 Kohlenstoffatomen, n eine ganze Zahl von 2 bis 4 und m eine ganze Zahl von 1 bis 4 bedeuten.

8. Produkt nach einem der Ansprüche 1 bis 5, dadurch gekennzeichnet, daß die Verbindung mit Aminfunktion (I) aus zumindest einem Polyamin der Formel

$$R—NR'-[-(CH_2)_n-NH-]_m-H$$

besteht, worin R und R' jeweils einen linearen Alkylrest mit 8 bis 24 Kohlenstoffatomen, wobei R und R' zusammengenommen 16 bis 32 Kohlenstoffatome aufweisen, n eine ganze Zahl von 2 bis 4 und m eine ganze Zahl von 1 bis 4 bedeuten.

9. Produkt nach einem der Ansprüche 1 bis 5, dadurch gekennzeichnet, daß die Verbindung mit Aminfunktion (I) aus zumindest einem Ätheramin der Formel

$$R—O-[-(CH_2)_n-NH-]_m-H$$

besteht, worin R einen Alkylrest mit 12 bis 24 Kohlenstoffatomen, n eine ganze Zahl von 2 bis 4 und m eine ganze Zahl von 1 bis 4 bedeuten.

10. Produkt nach einem der Ansprüche 1 bis 5, dadurch gekennzeichnet, daß die Verbindung mit Aminfunktion (II) aus zumindest einem Aminoalkohol der Formel

$$HO—CH_2—R''—NH_2$$

besteht, worin R'' einen linearen oder verzweigten Alkylenrest mit 1 bis 18 Kohlenstoffatomen bedeutet.

11. Produkt nach einem der Ansprüche 1 bis 10, dadurch gekennzeichnet, daß es erhalten ist durch radikalische Copolymerisation geeigneter Mengenanteile von zumindest einem linearen α-Olefin, zumindest einer α,β ungesättigten Dicarbonsäureverbindung, und zwar Disäure, Niedrigalkyldiester oder Anhydrid, und zumindest einem Alkylester einer ungesättigten Monocarbonsäure und anschließender Kondensation des gebildeten Copolymeren mit zumindest einer Verbindung mit primärer Aminfunktion der Formel (I) oder (II) in einem Mengenanteil von zumindest etwa 0,5 Mol pro Mol der eingesetzten α,β ungesättigten Dicarbonsäureverbindung.

12. Produkt nach Anspruch 11, dadurch gekennzeichnet, daß der Mengenanteil der Verbindung mit primärer Aminfunktion der Formel (I) oder (II) 0,9 bis 1,1 Mol pro Mol der eingesetzten α,β ungesättigten Dicarbonsäureverbindung beträgt.

13. Produkt nach einem der Ansprüche 1 bis 10, dadurch gekennzeichnet, daß es erhalten ist durch radikalische Copolymerisation geeigneter Mengenanteile an zumindest einem linearen α-Olefin, zumindest einer α,β ungesättigten Dicarbonsäureverbindung und zumindest einem Alkylester einer ungesättigten Monocarbonsäure, wobei diese α,β ungesättigte Dicarbonsäureverbindung aus zumindest einem N-substituierten Imid besteht, das durch vorherige Reaktion einer α,β ungesättigten Dicarbonsäureverbindung mit zumindest einer Verbindung mit primärer Aminfunktion der Formel (I) oder (II) erhalten ist.

14. Mitteldestillatzusammensetzung, dadurch gekennzeichnet, daß sie einen größeren Mengenanteil an Mitteldestillat mit einem Siedepunktsintervall zwischen 150 und 450°C und einen kleineren Mengenanteil, der zur Erniedrigung des Trübungspunktes ausreicht, an zumindest einem Produkt gemäß einem der Ansprüche 1 bis 13 enthält.

15. Mitteldestillatzusammensetzung nach Anspruch 14, dadurch gekennzeichnet, daß dieses Mitteldestillat ein Gasölschnitt mit einem Siedepunktsintervall, beginnend bei einer Anfangstemperatur von 160 bis 190°C bis zu einer Endtemperatur von 350 bis 390°C, ist.

16. Mitteldestillatzusammensetzung nach einem der Ansprüche 14 und 15, dadurch gekennzeichnet, daß der Mengenanteil dieses Produktes 0,001 bis 1 Gew.-% beträgt.

17. Mitteldestillatzusammensetzung nach Anspruch 16, dadurch gekennzeichnet, daß der Mengenanteil dieses Produktes 0,01 bis 0,2 Gew.-% beträgt.

**Claims**

1. A product, particularly useful as an additive for decreasing the cloud point of middle distillates, characterized in that it exhibits a number average molecular weight of from 1000 to 10000 and results from reacting with a copolymer containing:

— from 15 to 50% by moles of units (A) derived from at least one linear α-olefin;
— from 20 to 70% by moles of units (B) derived from at least one unsaturated α,β-dicarboxylic compound in the form of a diacid, a lower alkyl diester or an anhydride; and
— from 15 to 40% by moles of units (C) derived from at least one alkyl ester of unsaturated monocarboxylic acid,

at least one compound having a primary amine function, complying with one of the general formulae:

$$R—Z—[—(CH_2)_n—NH—]_m—H \quad (I)$$

$$HO—CH_2—R''—NH_2 \quad (II)$$

wherein R represents a monovalent saturated aliphatic radical having 1 to 30 carbon atoms, Z is selected from —NH— and —NR'— groups, wherein R' represents a monovalent saturated aliphatic radical having from 1 to 30 carbon atoms, and the oxygen atom —O—, n is an integer from 2 to 4, m is zero when Z is NH or an integer from 1 to 4 in any case; and R'' represents a divalent saturated aliphatic radical with 1 to 18 carbon atoms.

2. A product according to claim 1, characterized in that the linear olefin from which units (A) are derived contains at least 16 carbon atoms.

3. A product according to claim 1 or 2, characterized in that the linear α-olefin from which units (A) are derived contains 16 to 30 carbon atoms.

4. A product according to one of claims 1 to 3, characterized in that the unsaturated α,β-dicarboxylic compound from which units (B) are derived consists of at least a maleic or alkylmaleic acid, a methyl, ethyl or propyl diester of such an acid or a maleic or alkylmaleic anhydride.

5. A product according to one of claims 1 to 4, characterized in that the alkyl ester of unsaturated monocarboxylic acid from which units (C) are derived consists of at least one alkyl acrylate or methacrylate having 4 to 30 carbon atoms in the alkyl group.

6. A product according to one of claims 1 to 5, characterized in that the compound having an amine function (I) consists of at least one linear primary amine having 12 to 24 carbon atoms.

7. A product according to one of claims 1 to 5, characterized in that the compound having an amine function (I) consists of at least one polyamine of the formula:

$$R—NH—[—(CH_2)_n—NH—]_m—H$$

wherein R represents a linear alkyl radical having 12 to 24 carbon atoms, n is an integer from 2 to 4 and m an integer from 1 to 4.

8. A product according to one of claims 1 to 5, characterized in that the compound having an amine function (I) consists of at least one polyamine of the formule:

$$R—NR'—[—(CH_2)_n—NH—]_m—H$$

wherein R and R' represent each a linear alkyl radical having from 8 to 24 carbon atoms, R and R' together having from 16 to 32 carbon atoms, n is integer from 2 to 4 and m an integer from 1 to 4.

9. A product according to one of claims 1 to 5, characterized in that the compound having an amine function (I) consists of at least one ether-amine of the formula:

$$R—O—[—(CH_2)_n—NH—]_m—H$$

wherein R represents an alkyl radical of 12 to 24 carbon atoms, n is an integer from 2 to 4 and m an integer from 1 to 4.

10. A product according to one of claims 1 to 5, characterized in that the compound having an amine function (II) consists of at least one amino-alcohol of the formula

$$HO—CH_2—R''—NH_2$$

wherein R'' represents a linear or branched alkylene radical having 1 to 18 carbon atoms.

11. A product according to one of claims 1 to 10, characterized in that it is obtained by radical promoted copolymerization of convenient proportions of at least one linear α-olefin, at least one unsaturated α,β-dicarboxylic compound i.e. a diacid, a lower alkyl diester or an anhydride, and at least one alkyl ester of an unsaturated monocarboxylic acid, followed by the condensation with the formed copolymer of at least one compound with a primary amine function of formula (I) or (II), in a proportion of at least about 0.5 mole per mole of the unsaturated α,β-dicarboxylic compound involved.

12. A product according to claim 11, characterized in that the proportion of said compound with a primary amine function of formula (I) or (II) is from 0.9 to 1.1 mole per mole of the unsaturated α,β-dicarboxylic compound involved.

13. A product according to one of claims 1 to 10, characterized in that it is obtained by radical promoted copolymerization of convenient proportions of at least one linear α-olefin, at least one unsaturated α,β-dicarboxylic compound, and at least one alkyl ester of an unsaturated monocarboxylic acid, said unsaturated α,β-dicarboxylic compound consisting of at least one N-substituted imide obtained from a previous reaction of an unsaturated α,β-dicarboxylic compound with at least one compound having a primary amine function of formula (I) or (II).

14. A middle distillate composition, characterized in that it comprises a major proportion of a middle distillate having a distillation range from 150 to 450°C and a minor proportion sufficient to decrease the cloud point thereof of at least one product according to one of claims 1 to 13.

15. A middle distillate composition according to claim 14, characterized in that said middle distillate consists of a gas oil cut having a distillation range from an initial temperature of 160 to 190°C to a final temperature of 350 to 390°C.

16. A middle distillate composition according to one of claims 14 and 15, characterized in that the proportion of said product is from 0.001 to 1% by weight.

17. A middle distillate composition according to claim 16, characterized in that the proportion of said product is from 0.01 to 0.2% by weight.